# EUROPEAN PATENT APPLICATION

(11) **EP 3 264 173 A1**
(43) Date of publication of application: **03.01.2018**
(21) Application number: 16755571.3
(22) Date of filing: 24.02.2016
(51) Int. Cl.: G03B 21/62, G02B 3/00, G02B 5/02, G02B 26/10, G02B 27/01, G02B 27/48, G03B 21/00, G03B 21/10

(54) **TRANSMISSIVE SCREEN AND HEAD-UP DISPLAY DEVICE USING SAME**

(30) Priority: 26.02.2015 JP 2015036044
(71) Applicant: Dainippon Printing Co., Ltd., Shinjuku-ku Tokyo 162-8001 (JP)
(72) Inventor: KUBOTA, Shogo, Tokyo 162-8001 (JP)
(74) Representative: Müller-Boré & Partner Patentanwälte PartG mbB
(86) International application number: PCT/JP2016/055487
(87) International publication number: WO 2016/136827

(57) **Abstract**

In order to provide a transmission type screen capable of maintain sharpness of image without impairing uniformity of emergent light to be emitted therefrom, a transmission type screen 40 of the present invention includes a microlens array substrate 50 having a first surface 51 equipped with a microlens array 54 including a plurality of microlenses; and a light diffusion substrate 60 having a second surface 61 equipped with a light diffusion surface; wherein the first surface 51 of the microlens array substrate 50, which is equipped with the microlens array, and the second surface 61 of the light diffusion substrate 60, which is equipped with the light diffusion surface, are opposedly arranged.

## Description

### TECHNICAL FIELD

The present invention relates to a transmission type screen capable of preventing reduction in brightness in an image peripheral part, and a head-up display device using such a transmission type screen.

### BACKGROUND ART

For example, a head-up display (HUD) device for vehicle projects driving information (e.g., speed display and navigation display) as a virtual image such that the virtual image is projected ahead of a front windshield relative to a driver, i.e., the virtual image is superposed on a foreground of a front viewing field. A vehicle display system using such a HUD can restrain as much as possible movement of a line of vision of a driver, when he/she observes the driving information.

In the field of the above-described head-up displays and projectors, the use of a microlens array (MLA) as a transmission type screen is proposed.

In particular, the reason for using a microlens array as a transmission type screen member in the field of head-up displays resides in that the microlens array can make uniform an intensity of emergent light within a certain emergent angle range. On the other hand, when one sheet of microlens array is used, it is known that excessive pixel bright spots occur. Thus, it is proposed that two sheets of microlens array are used in a head-up display.

As an apparatus using two sheets of microlens array as a transmission type screen, Patent Document 1 (JP5149446B) discloses a light source unit including a light source, and an optical element including a first microlens array unit and a second microlens array unit in which a plurality of microlenses are arrayed respectively, wherein the first microlens array unit and the second microlens array unit are opposedly spaced apart from each other at a distance longer than a focal distance of the microlenses arrayed on the first microlens array unit.

Patent Document 1: JP5149446B

### DISCLOSURE OF THE INVENTION

According to the head-up display including a transmission type screen using two sheets of microlens array described in Patent Document 1, occurrence of excessive pixel bright spots can be prevented. However, in a transmission type screen using two sheets of microlens array, there is another problem in that uniformity of emergent light emitted from the transmission type screen is impaired, as well as sharpness of an image is reduced (resolution lowers).

The present invention has been made in order to solve the above problem. A transmission type screen according to the present invention comprises a microlens array substrate having a first surface equipped with a microlens array including a plurality of microlenses; and a light diffusion substrate having a second surface equipped with a light diffusion surface; wherein the first surface of the microlens array substrate, which is equipped with the microlens array, and the second surface of the light diffusion substrate, which is equipped with the light diffusion surface, are opposedly arranged.

In addition, in the transmission type screen according to the present invention, an opposed interval between the microlens array substrate and the light diffusion substrate is not less than 0 µm and not more than 100 µm.

In addition, in the transmission type screen according to the present invention, the microlens array is disposed in a first direction and a second direction crossing the first direction, and a diffusion angle of the microlens array substrate in the first direction and a diffusion angle of the microlens array substrate in the second direction differ.

In addition, in the transmission type screen according to the present invention, a diffusion angle of the light diffusion substrate is not less than 5° and not more than 6°.

In addition, in the transmission type screen according to the present invention, the light diffusion surface has micro-irregularities.

In addition, in the transmission type screen according to the present invention, a cycle of the micro-irregularities is random.

In addition, a head-up display device according to the present invention uses the transmission type screen as described above.

In addition, the head-up display device according to the present invention comprises a laser light source configured to emit laser light; and a scanner configured to allow the laser light to scan on the transmission type screen.

In addition, the head-up display device according to the present invention comprises a light source configured to emit light; and an LCOS element configured to reflect the light onto the transmission type screen.

In addition, the head-up display device according to the present invention comprises a light source configured to emit light; and a DMD element configured to reflect the light onto the transmission type screen.

As compared with a transmission type screen using two sheets of microlens array, the transmission type screen according to the present invention can maintain sharpness of an image without impairing uniformity of brightness of emergent light.

In addition, the head-up display device according to the present invention can maintain brightness sharpness without impairing uniformity of an image.

### BRIEF DESCRIPTION OF THE DRAWINGS

Fig. 1 is a view showing a vehicle 5 on which a head-up display device 100 according to an embodiment of the present invention is mounted.
Fig. 2 is a view showing a structure of the head-up display device 100 according to the embodiment of the present invention.
Fig. 3 is a view showing a transmission type screen 40 according to the embodiment of the present invention.
Fig. 4 is a view showing a transmission type screen 40 according to another embodiment of the present invention.
Fig. 5 is a view showing superposed image display of information performed by the head-up display device 100 according to the embodiment of the present invention.
Fig. 6 is a perspective view showing in enlargement an opposed interval between a microlens array substrate 50 of the transmission type screen 40 according to the embodiment of the present invention and a light diffusion substrate 60 thereof.
Fig. 7 is a view showing a microlens array 54 extending in a first direction and a second direction, which is seen from a z-axis direction.
Fig. 8 is a view for describing a definition of a diffusion angle.
Fig. 9 is a view for schematically describing an example of a manufacturing step(s) of the microlens array substrate 50.
Fig. 10 is a view for schematically describing an example of a manufacturing step(s) of the light diffusion substrate 60.
Fig. 11 is a view for schematically describing an example of a manufacturing step(s) of the light diffusion substrate 60.
Fig. 12 is a view for schematically describing an example of a manufacturing step(s) of the light diffusion substrate 60.
Fig. 13 is a view for schematically describing arrangement patterns of the microlens array substrate and the light diffusion substrate.
Fig. 14 is a view showing a result of the arrangement pattern (1).
Fig. 15 is a view showing a result of the arrangement pattern (2).
Fig. 16 is a view showing a result of the arrangement pattern (3).
Fig. 17 is a view showing a result of the arrangement pattern (4).
Fig. 18 is a view showing a result of the arrangement pattern (5).
Fig. 19 is a view showing a result of the arrangement pattern (6).
Fig. 20 is a view showing a result of the arrangement pattern (7).
Fig. 21 is a view showing a result of the arrangement pattern (8).
Fig. 22 is a view showing difference in existence and type of the light diffusion substrate 60.

### DESCRIPTION OF THE PREFERRED EMBODIMENTS

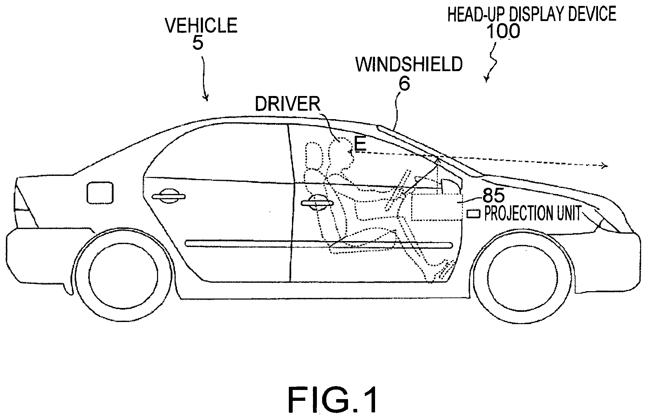

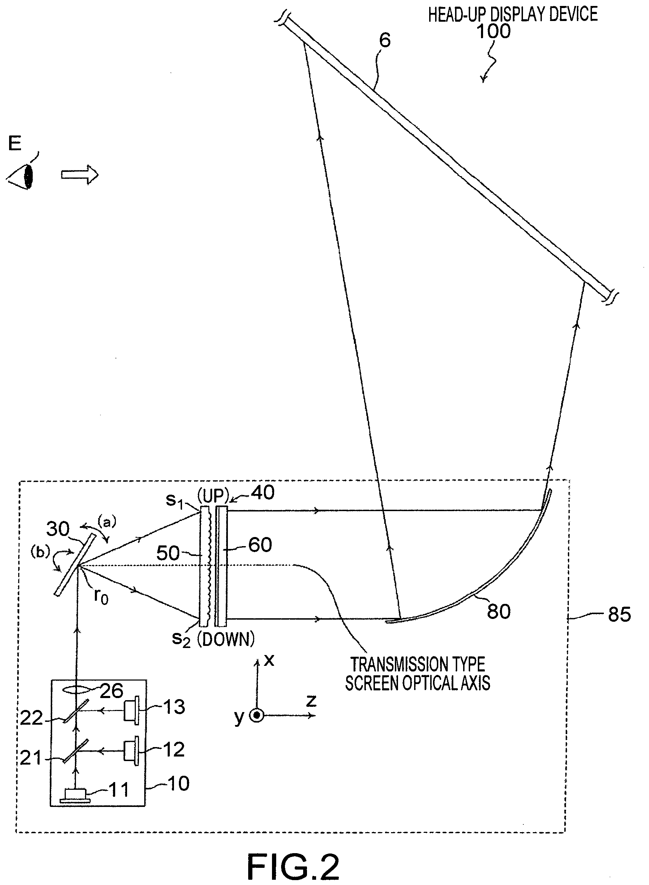

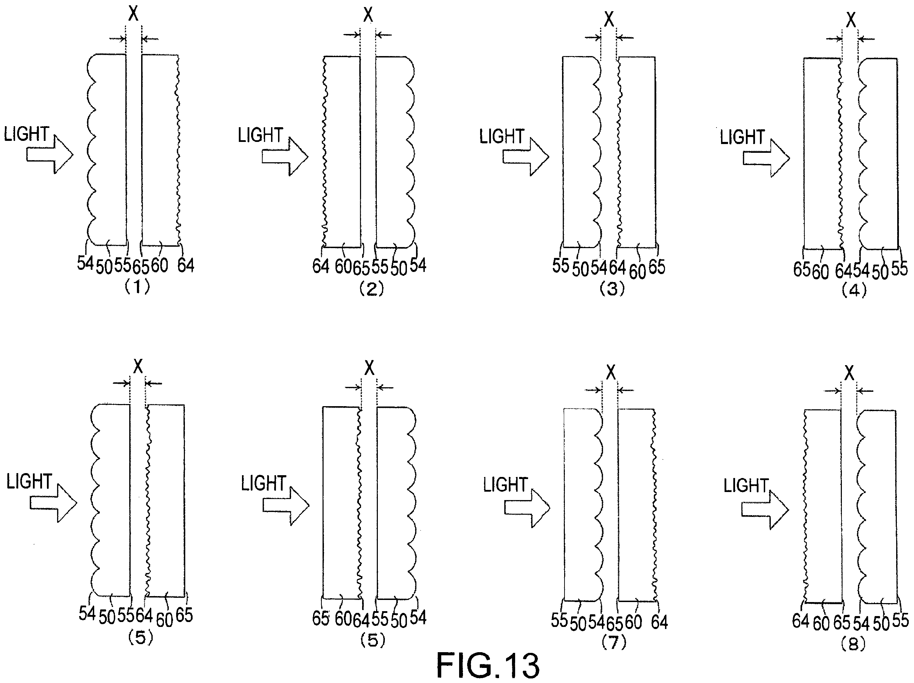

Embodiments of the present invention will be described herebelow with reference to the drawings. Fig. 1 is a view showing a vehicle 5 on which a head-up display device 100 according to an embodiment of the present invention is mounted. Fig. 2 is a view showing a structure of the head-up display device 100 according to the embodiment of the present invention. The drawings explained below are schematic views, and may differ from an actual shape, size and arrangement.

The head-up display device 100 according to the embodiment of the present invention is to be mounted on the vehicle 5, and is configured to project, from a projecting unit 85, speed information display, navigation information display, etc., as a virtual image, onto a windshield 6 or a combiner (not shown) disposed between a driver and the windshield 6, so as make a superposed display in which the virtual image is superposed on a foreground of a front viewing field.

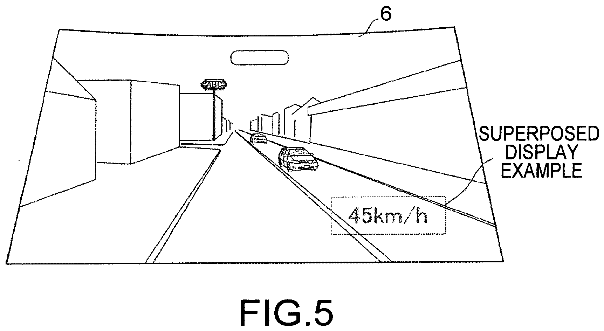

Fig. 5 is a view showing superposed image display of information performed by the head-up display device 100 according to the embodiment of the present invention. Fig. 5 shows an example of an image of the windshield 6 viewed by a observer's eye E of a driver of the vehicle 5.

Next, details of the projecting unit 85 constituting the head-up display device 100 are described. Fig. 2 mainly shows an example of a structure of the projection unit 85 of the head-up display device 100 according to the embodiment of the present invention. Coordinates in the projection unit 85 are defined by three-dimensional orthogonal coordinates of x, y and z. For example, light emitted from a first light source 11 is light that is emitted in a direction parallel with the x direction. In addition, an optical axis of the transmission type screen 40 is in parallel with the z direction. The optical axis of the transmission type screen 40 is defined as a normal line of a main surface of a microlens array substrate 50 constituting a part of the transmission type screen 40, in which a microlens array 54 is formed, the normal line passing through a center of gravity of a microlens array 54.

The transmission type screen 40 according to the present invention is composed of the microlens array substrate 50 and a light diffusion substrate 60. Details of the structure of such a transmission type screen 40 will be described later.

A direction of the axis in parallel with the x-axis is sometimes referred to as a first direction, and a direction of the axis in parallel with the y-axis is sometimes referred to as a second direction (perpendicular to the first direction). In addition, in the embodiment shown in Fig. 1, although a layout in which the first direction is a vertical direction and the second direction is a horizontal direction is described by way of example, a layout of the transmission type screen 40 in the head-up display device 100 is not limited to such a layout.

Light of an image to be displayed is emitted from a projector 10. The projector 10 includes a first light source 11, a second light source 12, a third light source 13, a first dichroic prism 21, a second dichroic prism 22, a collimator lens 26 and so on.

The first light source 11, the second light source 12 and the third light source 13 emit light of different wavelengths from one another. The first light source 11 emits light of a first wavelength, the second light source 12 emits light of a second wavelength, and the third light source 13 emits light of a third wavelength. In this embodiment, the light of the first wavelength emitted from the first light source 11 may be blue light, the light of the second wavelength emitted from the second light source 12 may be green light, and the light of the third wavelength emitted from the third light source 13 may be red light.

As the first light source 11, the second light source 12 and the third light source 13, various laser apparatuses such as semiconductor laser apparatuses (laser light sources) that emit laser light as coherent light.

In this embodiment, the light of the first wavelength emitted from the first light source 11 and the light of the second wavelength emitted from the second light source 12 respectively enter into different surfaces of the first dichroic prism 21, and the light of the third wavelength emitted from the third light source 13 enters into the second dichroic prism 22.

The light of the first wavelength emitted from the first light source 11 transmits through the first dichroic prism 21, while the light of the second wavelength emitted from the second light source 12 is reflected by the first dichroic prism 21. Thus, the light of the first wavelength and the light of the second wavelength are combined.

The thus combined light of the light of the first wavelength and the light of the second wavelength enters into the second dichroic prism 22.

The light of the first wavelength emitted from the first light source 11 and the light of the second wavelength emitted from the second light source 12 transmit through the second dichroic prism 22, while the light of the third wavelength emitted from the third light source 13 is reflected by the second dichroic prism 22. Thus, the light of the first wavelength, the light of the second wavelength and the light of the third wavelength are combined.

The laser light, which is the combination of the light of the first wavelength, the light of the second wavelength and the light of the third wavelength formed by the second dichroic prism 22, passes through the collimator lens 26 so as to be reflected by a projection mirror 30, and enters into the transmission type screen 40. The projection mirror 30 has a function of bidimensionally changing an angle. Thus, light incident thereon can be bidimensionally scanned, so that a projection image by desired laser light is formed.

The projection mirror 30 is configured to be movable in a rotation direction (a) about a first axis (not shown) in parallel with the y-axis, and to be movable in a rotation direction (b) about a second axis (not shown) perpendicular to the first axis.

The projection mirror 30 can be suitably replaced with another optical member, as long as it can bidimensionally scan light incident thereon. As such an optical member, it is possible to suitably use a galvanometer mirror, a galvanometer scanner, a polygon mirror, a prism, an acousto-optical element, an optical element using MEMS (Micro Electro Mechanical System) technique, etc.

In this embodiment, a point of the projection mirror 30 into which laser light enters and by which the laser light is reflected, and a point at which the optical axis of the transmission type screen 40 and the projection mirror 30 intersect with each other correspond to each other. An optical path length between a laser light reflection point r₀ in the projection mirror 30 and an uppermost scanning point s₁ in the transmission type screen 40, and an optical path length between the laser light reflection point r₀ in the projection mirror 30 and a lowermost scanning point s₂ in the transmission type screen 40, are equivalent to each other.

The transmission type screen 40 according to the present invention includes the microlens array substrate 50 and the light diffusion substrate 60. Laser light emergent from the projection mirror 30 is allowed to scan on the microlens array substrate 50 of the transmission type screen 40. The transmission type screen 40 is an optical member formed of a transparent substrate having a predetermined transmission factor or more.

The transmission type screen 40 can be formed by using and molding an organic resin material, or formed by using an inorganic material such as glass.

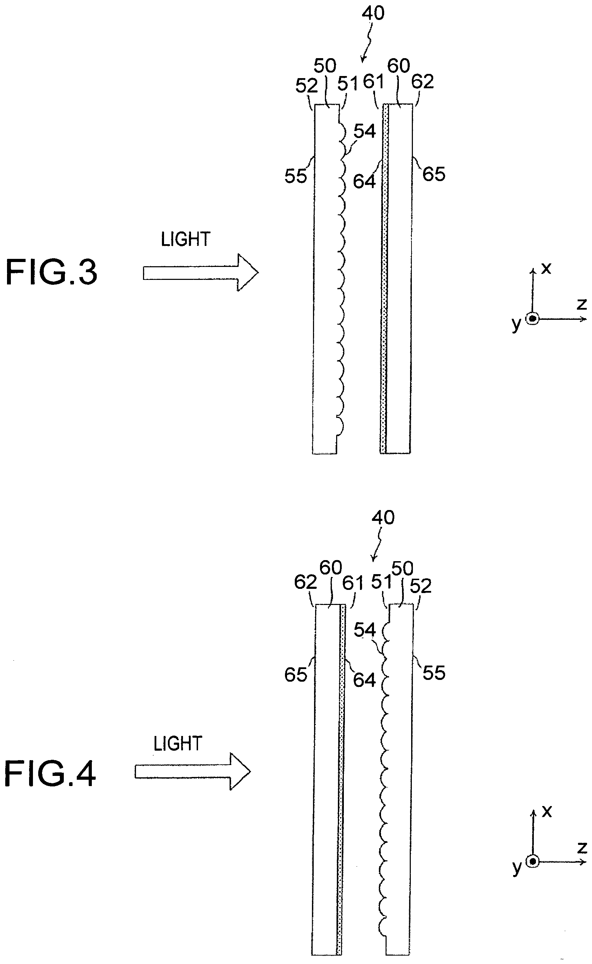

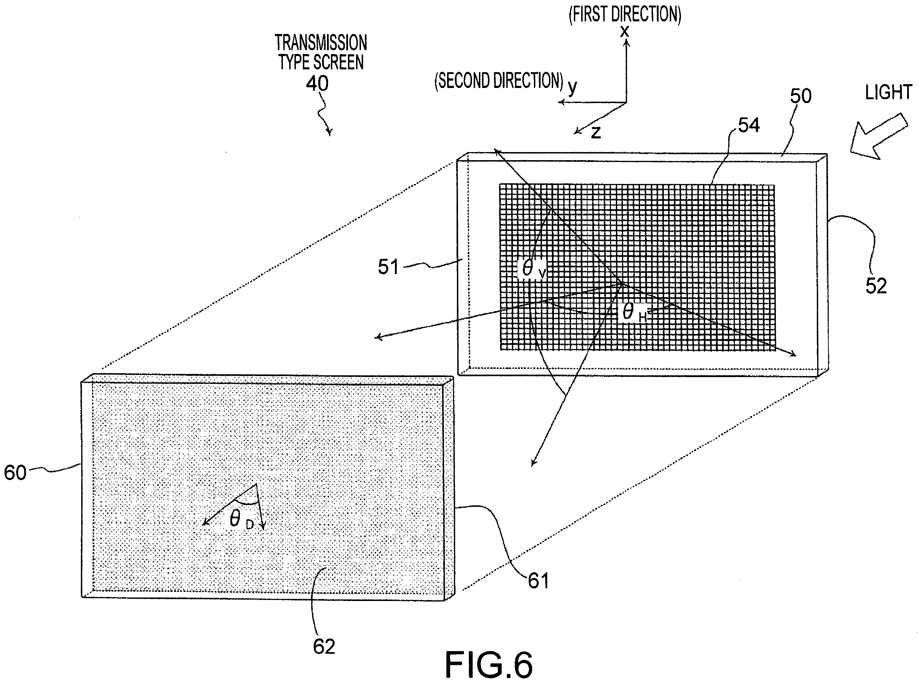

Fig. 3 is a view showing the transmission type screen 40 according to the embodiment of the present invention. Fig. 6 is a perspective view showing in enlargement an opposed interval between the microlens array substrate 50 of the transmission type screen 40 according to the embodiment of the present invention and the light diffusion substrate 60 thereof.

In the embodiment of Fig. 3, a direction of the axis in parallel with the x-axis is defined as a first direction, and a direction of the axis in parallel with the y-axis is defined as a second direction (perpendicular to the first direction).

Under the above definitions, the transmission type screen 40 has the main surface that extends in the first direction and the second direction perpendicular to the first direction.

The microlens array substrate 50 includes a first main surface 51 (referred to also as "first surface" herebelow) of the microlens array substrate 50, and a second main surface 52 (referred to also as "third surface" herebelow) of the microlens array substrate 50. The first surface 51 is equipped with the microlens array 54 in which a plurality of microlenses 53 are cyclically arrayed. The third surface 52 is a smooth surface 55. The microlens array substrate 50 is formed of a transparent substrate. The smooth surface herein means a surface that is not machined to have a structure such as a microlens provided on the first surface.

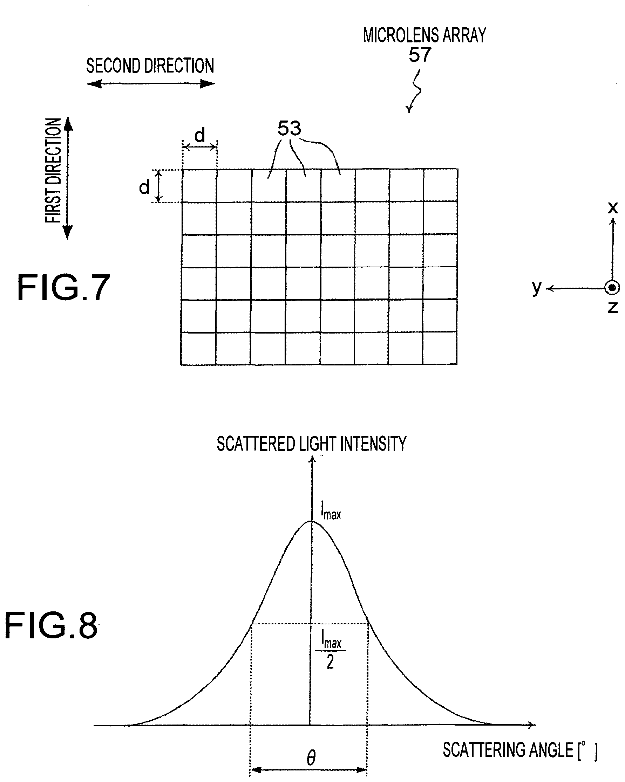

Fig. 7 is a view showing the microlens array 54 extending in the first direction and the second direction, which is seen from a z-axis direction. As shown in the figure, when seen from the z-axis direction, a square microlens 53 whose side length is d is used in the transmission type screen 40 according to the embodiment. Pitches along which the microlenses 53 are arrayed are preferably the same in the first direction and the second direction. This is because the microlenses 53 are densely arrayed so as to reduce straight transmission light.

Each microlens 53 is a spherical lens or a non-spherical lens. The microlens 53 has, at an apex on the side of the first surface 51, a curvature of a radius of curvature R₁ in the first direction and a curvature of a radius of curvature R₂ in the second direction. The apex means a point at which each microlens 53 projects most in the z-axis direction.

It is preferable that a sectional shape in a plane of each microlens 53, which is in parallel with the first direction and includes the optical axis of the microlens 53, differs from a sectional shape in a plane of each microlens 53, which is in parallel with the second direction and includes the optical axis of the microlens 53. In more detail, although the radius of curvature R₁ in the first direction and the radius of curvature R₂ in the second direction at the apex on the side of the first surface 51 of the microlens 53 may be equivalent to each other, they are preferably different from each other.

The reason is described below. In general, image information to be displayed by the head-up display device 100 has different aspect ratios. Thus, in order that reduction in brightness in an image peripheral part is prevented such that the reduction in brightness in upper and lower peripheral parts and the reduction in brightness in right and left peripheral parts are substantially the same, the radius of curvature R₁ in the first direction and the radius of curvature R₂ in the second direction at the apex on the side of the first surface 51 of the microlens 53 preferably differ from each other.

Further, in consideration that image information to be displayed by the head-up display device 100 is generally horizontally long, the radius of curvature R₁ in the first direction at the apex on the side of the first surface 51 of the microlens 53 is preferably larger than the radius of curvature R₂ in the second direction.

In a head-up display using a laser light source as a transmission type screen of the head-up display device 100, speckle noise caused by laser light can be advantageously prevented by using the microlens array 54.

In addition, the light diffusion substrate 60 has a first main surface 61 (referred to also as "second surface" herebelow) and a second main surface 62 (referred to also as "fourth surface" herebelow). The second surface 61 is equipped with a light diffusion surface 64, and the fourth surface 62 is a smooth surface 65.

The light diffusion surface 64 has micro-irregularities a cycle of which is random. A concrete structure of the light diffusion surface 64 having micro-irregularities of random cycle will be apparent from the below description about manufacturing steps. Similarly to frosted glass, the light diffusion surface 64 is formed by providing micro-scratches in a smooth surface. Further, the smooth surface of the fourth surface 64 is a surface in which a structure such as the micro-irregularities of the second surface is not provided, similarly to the above third surface.

In the transmission type screen 40 according to the present invention, the first surface 51 of the microlens array substrate 50, which is equipped with the microlens array 54, and the second surface 61 of the light diffusion substrate 60, which is equipped with the light diffusion surface 64, are opposedly arranged. Moreover, an opposed interval between the microlens array substrate 50 and the light diffusion substrate 60 is preferably not less than 0 µm and not more than 100 µm.

The above opposed interval means a distance between a part of the microlens array substrate 50, which is the closest to the light diffusion substrate 60, and a part of the light diffusion substrate 60, which is the closest to the microlens array substrate 50. For example, the opposed interval means a distance between the most projecting apex of the microlens array 54 of the microlens array substrate 50 and the most projecting apex of the light diffusion surface 64 of the light diffusion substrate 60. The opposed interval is similar to a distance X described hereafter.

In the aforementioned transmission type screen 40, light emergent from the projection mirror 30 to be allowed to scan on the microlens array substrate 50 form an image on the light diffusion surface of the light diffusion substrate 60.

In the transmission type screen 40 according to the present invention, since an image is formed by the microlens array substrate 50 and the light diffusion substrate 60, light can be more efficiently transmitted in a viewing direction, as compared with a case in which an image is formed by using a mere screen, whereby increase in brightness can be achieved. In addition, sufficient brightness can be obtained even by a small quantity of light. Thus, an output of each laser light source can be decreased to save energy.

An image formed by the laser light on the microlens array 54 of the transmission type screen 40 is reflected by a concave mirror 80 so as to be projected on the windshield 6.

Thus, the driver can recognize the image reflected by the windshield 6. The projection unit 85 may be of either a structure in which an image is projected on the windshield 6 of the vehicle, or a structure in which an image is projected on a combiner (not shown) disposed between the driver and the windshield 6.

Although this embodiment employs a layout in which the microlens array substrate 50 is disposed on the side of the light source such as laser light, a layout in which the light diffusion substrate 60 of the transmission type screen 40 is disposed on the side of the light source, which is shown in Fig. 4, may be employed. However, it was found out that the former layout is preferred, from an experiment result described later.

An optical member disposed between the transmission type screen 40 and the windshield 6 or the combiner (not shown) is not limited to the concave mirror 80. Another suitable optical member can be used depending on a layout of the transmission type screen 40 and the windshield 6 or the combiner (not shown).

In the aforementioned embodiment, there is described an example in which the transmission type screen 40 is applied to the head-up display device 100 that employs a laser projector system including the projector 10 and the projection mirror 30 as a drawing system of the head-up display device 100. However, the transmission type screen 40 can be applied to the head-up display device 100 that employs an LCOS system using a light source and an LCOS (Liquid crystal on silicon) element, or a DLP (Digital Light Processing) system using a light source and a DMD (Digital Mirror Device) element.

In the case of the LCOS system, the head-up display device 100 can be realized in such a manner that light from the light source is selectively reflected by the LCOS element, which is a reflective liquid crystal element, toward the transmission type screen 40. On the other hand, in the case of the DLP system, the head-up display device 100 can be realized in such a manner that light from the light source is selectively reflected by the DMD element, which is a reflective element having a plurality of micro-mirrors, toward the transmission type screen 40.

Next, properties of a base material of the microlens array substrate 50 and the light diffusion substrate 60 constituting the transmission type screen 40 are described. Any material can be used as the base material of the transmission type screen 40, as long as it is a transparent material. For example, a thermoplastic resin, a thermosetting resin, a UV curing resin, an electron beam curing resin, glass or the like can be used.

When a thermoplastic resin is used as the base material of the microlens array substrate 50 and the light diffusion substrate 60, a polycarbonate resin, an acryl-based resin, a fluorine-based acryl resin, a silicone-based acryl resin, an epoxy acrylate resin, a polystyrene resin, a cycloolefin polymer, a methyl styrene resin a fluorene resin, PET, polypropylene and so on can be used.

In addition, it is not necessary that the microlens array substrate 50 and the light diffusion substrate 60 are formed of one base material. For example, in the case of the microlens array substrate 50, the microlens array 54 and a substrate member may be formed as separate members, and these members may be joined by means of an adhesive and so on. Note that, in this case, all the members have preferably the same refractive index.

Next, a method of processing the microlens array 54 in the transmission type screen 40 is described.

For example, the microlens array 54 can be formed in the following manner. A metal mold is mechanically cut into a microlens array mold by using a nano-machining apparatus, and the mold is transferred to a transparent resin. In addition, as the processing method of the microlens array 54, the method of transferring the mold to a resin by injection molding can be also used. In addition, a method in which the microlens array 54 is directly formed by mechanically cutting a transparent resin can also be used.

In order to control a light intensity distribution (which depends on diffusion angles of the microlens array substrate 50 and the light diffusion substrate 60 and so on) of a view angle of the head-up display device 100 by the above processing, the above-described non-spherical processing of nano unit is effective.

In addition, as the processing method of the microlens array 54, a resist / reflow method, an ink jet method, an electron beam exposure method, a laser beam drawing method, a method using chemical etching or plasma etching, a method using a punch and so on can be employed.

Next, preferred optical properties of the transmission type screen 40 when the transmission type screen 40 is used in the head-up display device 100 are described. Firstly, a diffusion angle, which is frequently used later, is defined.

Fig. 8 is a view for describing a definition of the diffusion angle. In this specification, a diffusion angle θ is defined as follows. Light is perpendicularly made to enter into the microlens array substrate 50 and the light diffusion substrate 60 constituting the transmission type screen 40, and a maximum scattered light intensity Iₘₐₓ of the light emergent from the microlens array substrate 50 and the light diffusion substrate 60 is obtained. The diffusion angle θ is a full width at half maximum (FWHM) that is a difference between two angles which are half the maximum scattered light intensity Iₘₐₓ.

Under the above definition, in the microlens array substrate 50, a diffusion angle θ_{H} in the horizontal direction (second direction) and a diffusion angle θ_{V} in the vertical direction (first direction), which are shown in Fig. 6, has preferably a relationship θ_{H} > θ_{V}. This is because image information to be displayed by the head-up display device 100 is horizontally long.

Further, preferably, the horizontal diffusion angle θ_{H} is not less than 20° and not more than 60°, and the vertical diffusion angle θ_{V} is not less than 5° and not more than 35° More preferably, the horizontal diffusion angle θ_{H} is not less than 20° and not more than 50°, and the vertical diffusion angle θ_{V} is not less than 10° and not more than 30°. In this case, the transmission type screen 40 used in the head-up display device 100 is optimum.

In addition, the light diffusion substrate 60 preferably has a diffusion angle θ_{D} that is not less than 5° and not more than 6°. As in the transmission type screen 40 according to the present invention, when the microlens array substrate 50 and the light diffusion substrate 60 are used in combination, it is preferable to combine the microlens array substrate 50 with the light diffusion substrate 60 having a small diffusion angle, in order to keep an anisotropic diffusion property (property in which diffusion profiles differ in the horizontal direction and the vertical direction) of the microlens array substrate 50 (this is because, when the microlens array substrate 50 is combined with a light diffusion substrate having a large diffusion angle, an isotropic diffusion property of the light diffusion substrate becomes dominant, resulting in an isotropic diffusion as a whole). However, if the diffusion angle of the light diffusion substrate 60 is not more than 5°, a rainbow pattern caused by diffraction light does not disappear. Thus, the present invention employs, as the diffusion substrate 60, a diffusion substrate having a diffusion angle θ_{D} that is not less than 5° and not more than 6°.

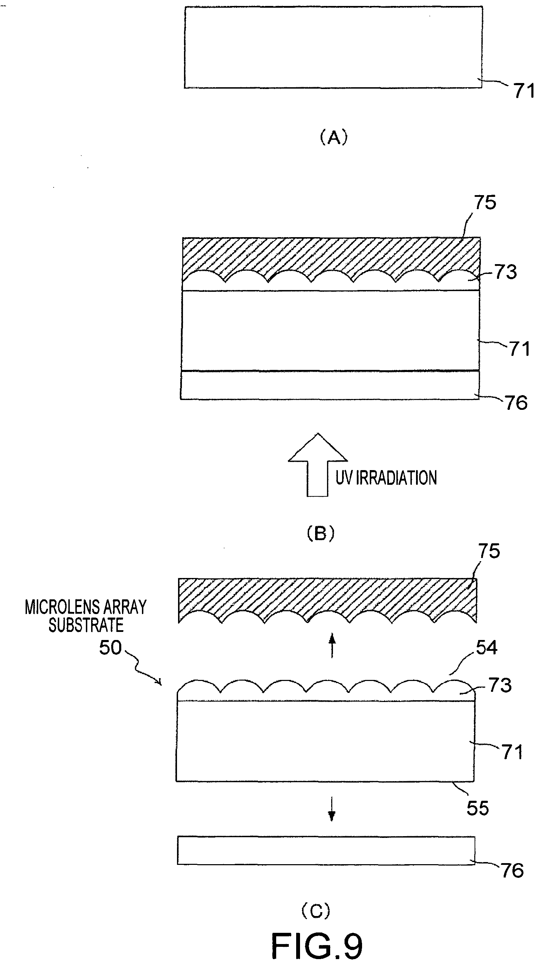

Fig. 9 is a view for schematically describing an example of manufacturing steps of the microlens array substrate 50. In this example, the microlens array substrate 50 is manufactured in the order of Fig. 9(A), Fig. 9(B) and Fig. 9(C).

In the step of Fig. 9(A), a substrate 71 made of a polycarbonate resin as a transparent resin material is prepared. Then, a steel member is mechanically cut (ROBONANO manufactured by FANUC) to form a recessed-shaped mold 75 on which a non-spherical microlens array is inverted.

Then, the steel member (mold 75) on which the inverted microlens array is formed is coated with a UV resin. As shown in Fig. 9(B), the substrate 71 is sandwiched between the mold 75 and a reference sheet 76 made of polycarbonate, and is irradiated with UV from the side of the reference sheet 76. Thus, a microlens part 73 is formed on the substrate 71.

Then, as shown in Fig. 9(C), the mold 75 is demolded and the reference sheet 76 is peeled, so that the microlens array substrate 50 can be obtained.

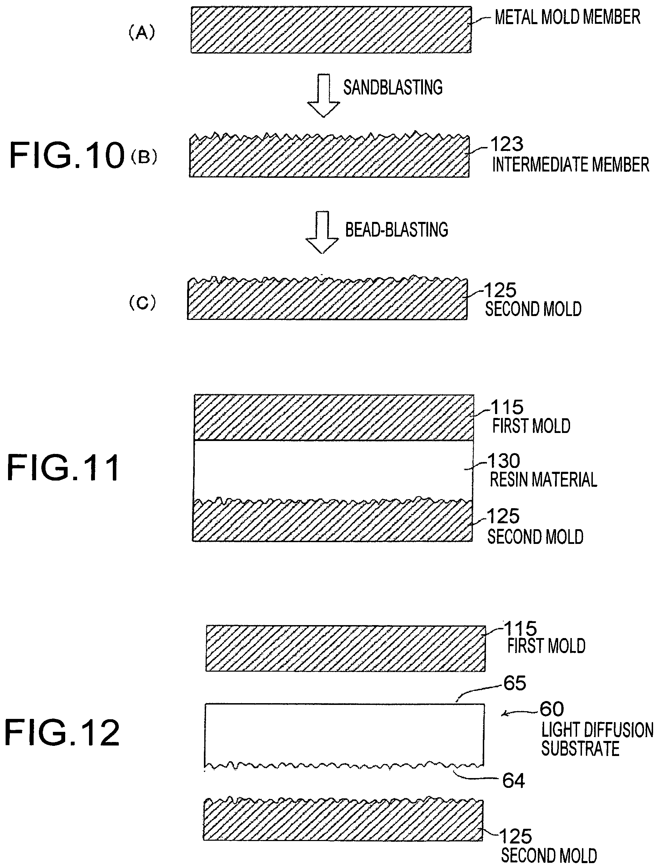

Next, an example of manufacturing steps of the light diffusion substrate 60 is described. Figs. 10 to 12 are views for schematically describing an example of manufacturing steps of the light diffusion substrate 60.

Fig. 10(A) shows a mold member. One surface of the mold member is sandblasted to obtain an intermediate member 123 shown in Fig. 10(B). Then, the sandblasted surface of the intermediate member 123 is further bead-blasted to obtain a second mold 125 shown in Fig. 10(C).

In this embodiment, micro-irregularities are transferred to a resin by injection molding with the use of such a mold member. Since these micro-irregularities are transferred to the blasted surface, a cycle of irregularities is random. The thus manufactured micro-irregularities function as the light diffusion surface 60 so that light is isotropically diffused. The term "random" means that the array of micro-irregularities does not have regularity.

In this embodiment, the metal mold member is sandblasted and is further bead-blasted so as to form a transfer pattern of the micro-irregularities. However, the transfer pattern of the micro-irregularities may be formed only by either sandblasting or bead-blasting the metal mold member.

Note that, when the metal mold member is sandblasted and is further bead-blasted so as to form a transfer pattern of the micro-irregularities, the diffusion property can be controlled by the sandblasting and the surface can be smoothened by the bead-blasting. Thus, haze of the light diffusion surface 64 created by the second mold 125 can be reduced.

Fig. 11 shows that a space between the first mold 115 and the second mold 125 is filled with a transparent resin material 130. Fig. 12 shows that, after the resin material 130 is cured (solidified), the resin material 130 is demolded from the first mold 115 and the second mold 125, so as to obtain the light diffusion substrate 60 according to the present invention.

In the above manufacturing step example of the light diffusion substrate 60, the light diffusion surface 64 is obtained by transferring the blasted part of the mold. However, it is possible to form micro-irregularities by directly sandblasting and/or bead-blasting one surface of the substrate 71 having opposed smooth surfaces.

As described above, the transmission type screen 40 according to the present invention is characterized in that the first surface 51 of the microlens array substrate 50, which is equipped with the microlens array 54, and the second surface 61 of the light diffusion substrate 60, which is equipped with the light diffusion surface 64, are opposedly arranged. An experiment which was conducted for confirming that this opposed arrangement is preferred is described herebelow.

Fig. 13 is a view for schematically describing arrangement patterns of the microlens array substrate and the light diffusion substrate. (1) to (8) show different opposed arrangements of the microlens array substrate and the light diffusion substrate. (3) and (4) are the arrangement patterns according to the present invention. In Fig. 13, an orientation of light emitted from a projection unit is shown by an arrow.

In addition, X shows an opposed interval. The opposed interval X is defined as a distance between a point of the microlens array substrate, which most projects toward the light diffusion substrate, and a point of the light diffusion substrate, which most projects toward the microlens array substrate. The experiment was conducted for the above-described (1) to (8) patterns in which X had eight variations of 0, 50, 75, 100, 250, 500, 1000 and 2000 [µm]. The opposed interval X could be confirmed by means of a clearance gauge.

A substrate of a tetragonal lattice array in which microlenses had a pitch of 31 µm and a height 5 µm was used as the microlens array substrate. In addition, AROMA-BRIGHT FG-2035C (manufactured by Nippon Polyester Co., Ltd) that is a diffusion plate made of polycarbonate was used as the light diffusion substrate.

By using transmission type screens of (1) to (8) arrangement patterns, two kinds of images, i.e., a white image and a text image were projected onto a combiner (a glass substrate with a low reflection film applied to a rear surface thereof). The images were photographed by means of a digital camera (3872 × 2592 pixels).

As for data of the photographed white image, the center of the picture was trimmed at a size of 256 × 256 pixels by using Image J (1.47v). Then, an average brightness (Mean gray value) of gray scales (256 gradations), a brightness dispersion (square of Standard deviation), a relative standard deviation (standard deviation / average brightness) of each pixel were obtained. They are shown graphically.

A higher value of the average brightness, which is an index of lightness, is preferred. On the other hand, a lower value of the brightness dispersion, which is an index of variation, is preferred. Moreover, since a higher lightness value and a lower variation value are preferred, a lower value of the relative standard deviation, which is obtained by standard deviation / average brightness, is preferred.

Data of the photographed text image were used in a sensory inspection for evaluating readability of the text.

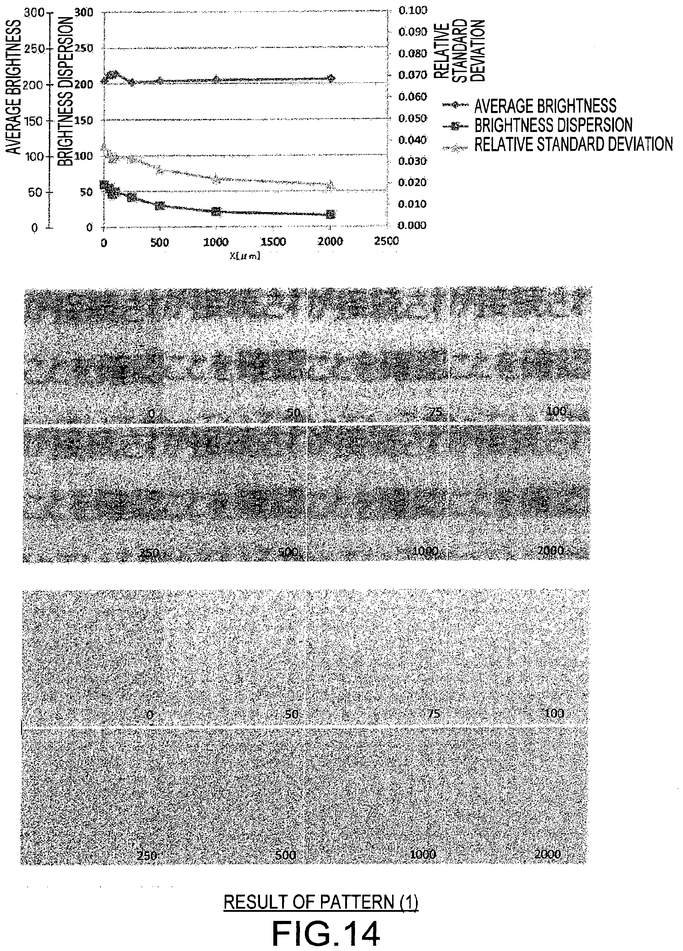

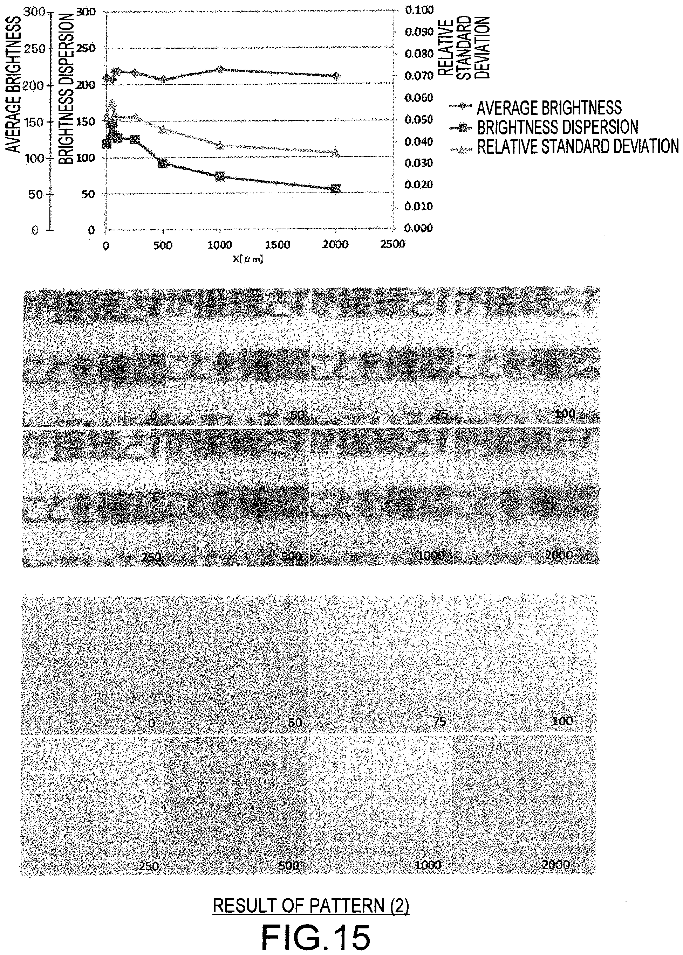

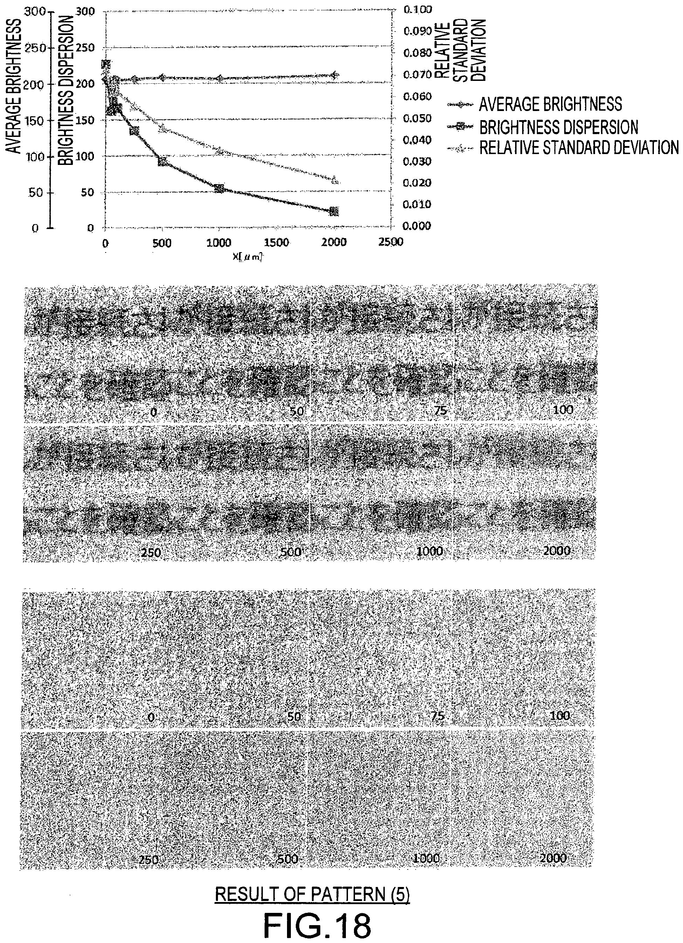

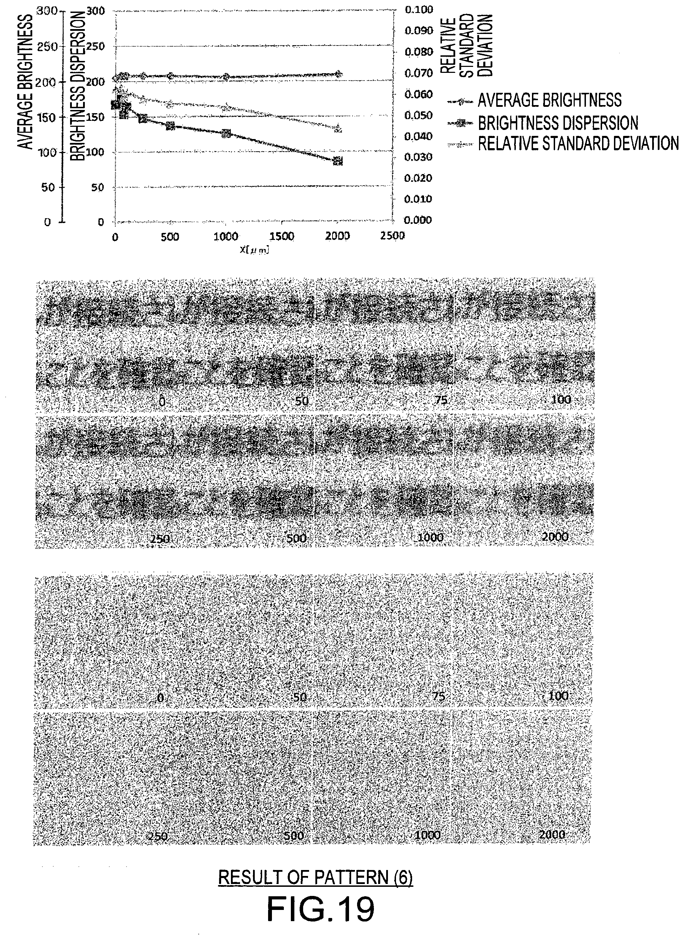

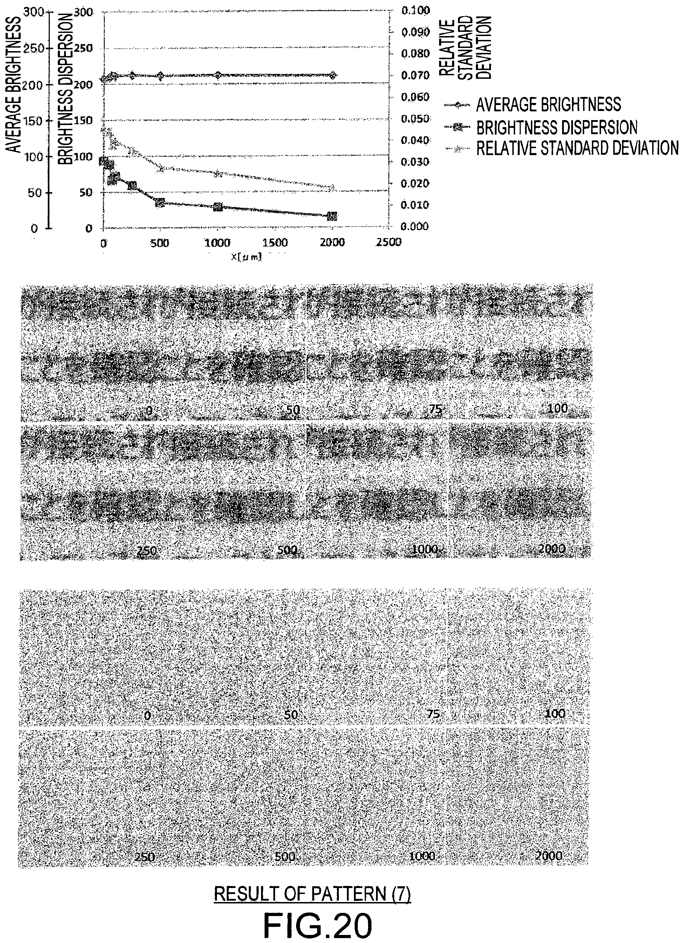

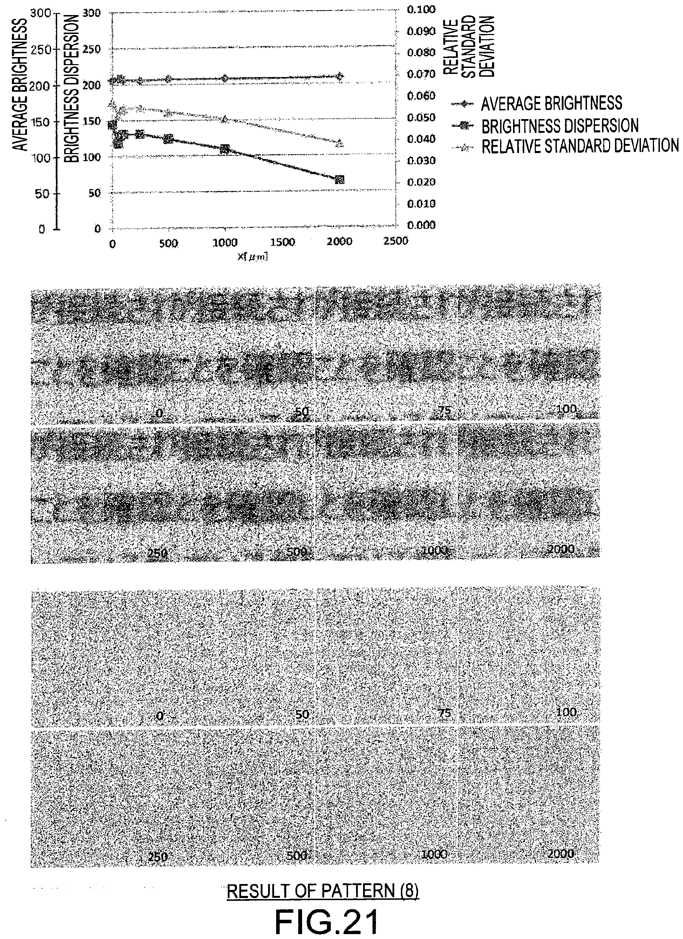

Figs. 14 to 21 show results of the respective arrangement patterns. In the respective drawings, (A) is a graph showing the average brightness, the brightness dispersion and the relative standard deviation for each opposed interval, (B) shows a photographed text image, and (C) shows a photographed white image for which the values shown in (A) were calculated. In (B) and (C), the opposed interval X is displayed in each image at a lower right portion thereof.

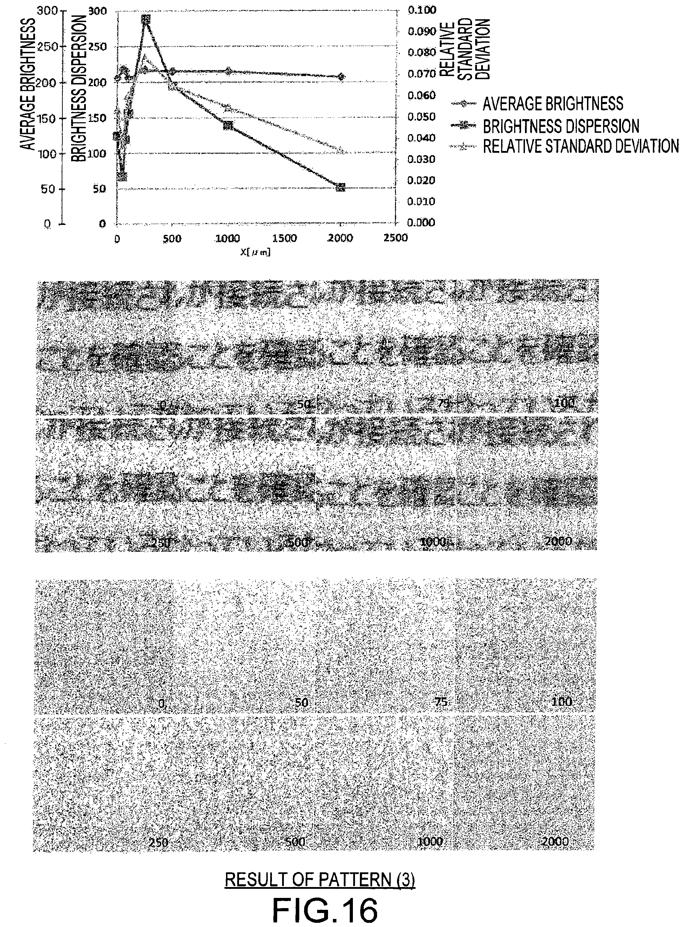

In particular, also in the result of the arrangement pattern (3) shown in Fig. 16, when X=50 [µm], the relative standard deviation takes a minimum value. Thus, this type is understood as the most preferred embodiment. Further, when X=0 to 100 [µm], the relative standard deviation takes a relatively low value. Thus, it can be understood that this type can sufficiently function as the transmission type screen 40. In addition, in the range of X=0 to 100 [µm], the text readability is high.

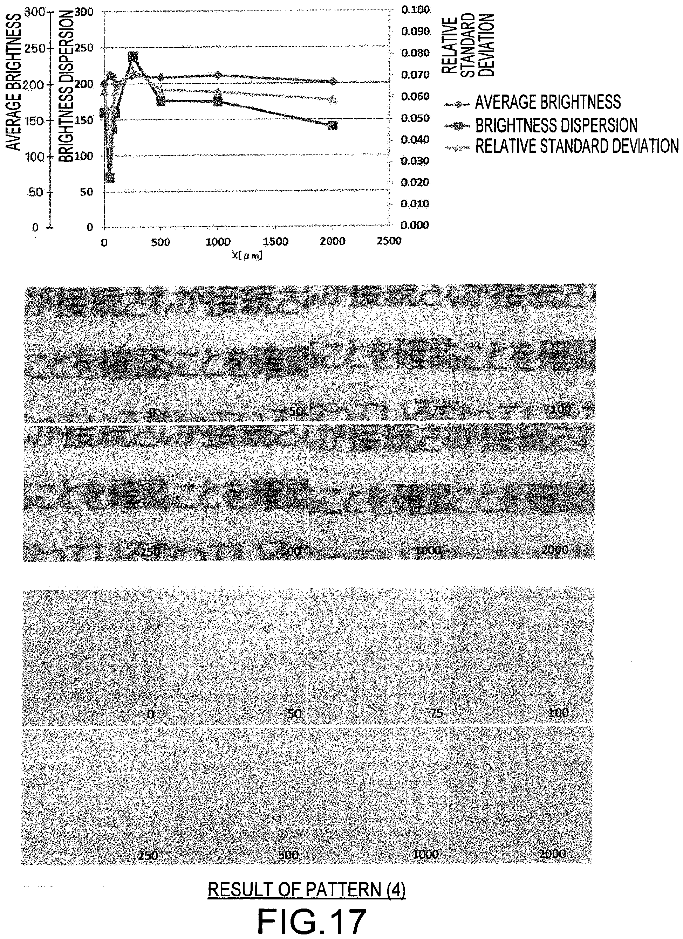

Similarly, in the result of the arrangement pattern (4) shown in Fig. 17, when X=50 [µm], a speckle contrast takes a minimum value. Thus, this type is understood as the most preferred embodiment. Further, when X=0 to 100 [µm], the speckle contrast takes a relatively low value. Thus, it can be understood that this type can sufficiently function as the transmission type screen 40. In addition, in the range of X=0 to 100 [µm], the text readability is high.

The transmission type screen 40 according to the present invention is characterized in that the first surface 51 of the microlens array substrate 50, which is equipped with the microlens array 54, and the second surface 61 of the light diffusion substrate 60, which is equipped with the light diffusion surface 64, are opposedly arranged. The transmission type screen 40 according to the present invention can maintain sharpness of an image without impairing uniformity of emergent light to be emitted therefrom, as compared with a screen using two sheets of microlens array. The effect provided by the transmission type screen 40 according to the present invention could be experimentally confirmed as described above.

In addition, since the head-up display device 100 according to the present invention uses the aforementioned transmission type screen 40, the head-up display device 100 according to the present invention can maintain sharpness of an image without impairing uniformity of image.

Next, an experiment conducted for confirming that, in the transmission type screen 40 according to the present invention, a diffusion angle θ_{D} that is not less than 5° and not more than 6° is preferred is described. The diffusion angle θ_{D} was calculated by measuring a Y value in a transmission factor measurement by bending by using a three-dimensional gonio-spectrophotometric color measurement system (GCMS-13 type, manufactured by Murakami Color research Laboratory).

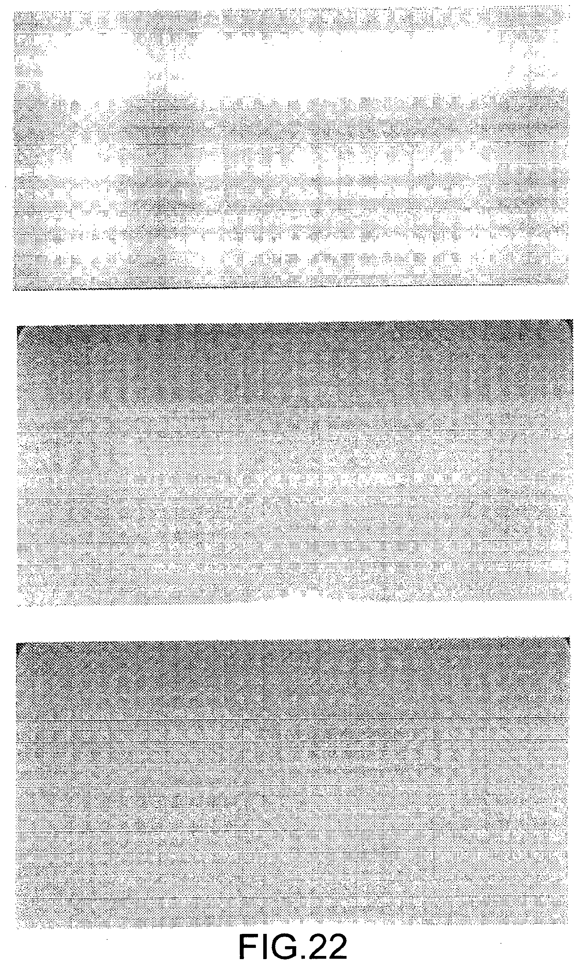

Fig. 22 shows observation results in which, as a transmission type screen, (A) only the microlens array substrate 50 was used, (B) the microlens array substrate 50 and the light diffusion substrate 60 having a diffusion angle θ_{D} of 4.6° were combined, and (C) the microlens array substrate 50 and the light diffusion substrate 60 having a diffusion angle θ_{D} of 5.7° were combined.

In the transmission type screen shown in Fig. 22(A) in which only the microlens array substrate 50 was used, a stripe pattern of rainbow color, which is caused by diffraction light, clearly appears, and thus this transmission type screen is not appropriate.

In the transmission type screen shown in Fig. 22(B) in which the microlens array substrate 50 and the light diffusion substrate 60 having a diffusion angle θ_{D} of 4.6° were combined, although a stripe pattern of rainbow color, which is caused by diffraction light, decreases as compared with the case shown in Fig. 22(A), this transmission type screen is not still appropriate.

In the transmission type screen 40 according to the present invention shown in Fig. 22(C) in which the microlens array substrate 50 and the light diffusion substrate 60 having a diffusion angle θ_{D} of 5.7° were combined, a stripe pattern of rainbow color, which is caused by diffraction light, disappear, and thus this transmission type screen can be appropriately used as a transmission type screen.

For this reason, the present invention employs, as the diffusion substrate 60, a diffusion substrate having a diffusion angle θ_{D} that is not more than 5° and not less than 6°.

As described above, the transmission type screen according to the present invention is characterized in that the first surface of the microlens array substrate, which is equipped with the microlens array, and the second surface of the light diffusion substrate, which is equipped with the light diffusion surface, are opposedly arranged. The transmission type screen according to the present invention can maintain sharpness of an image without impairing uniformity of emergent light to be emitted therefrom, as compared with a transmission type screen using two sheets of microlens array.

In addition, since the head-up display device according to the present invention uses the aforementioned transmission type screen, the head-up display device according to the present invention can maintain sharpness of an image without impairing uniformity of image.

A conventional transmission type screen using two sheets of microlens array has a problem in that uniformity of emergent light emitted from the transmission type screen is impaired, as well as sharpness of an image is reduced (resolution lowers). On the other hand, the transmission type screen according to the present invention is characterized in that a main surface of a microlens array substrate, which is equipped with a microlens array, and a main surface of a light diffusion substrate, which is equipped with the light diffusion surface, are opposedly arranged. Since the transmission type screen according to the present invention can maintain sharpness of an image without impairing uniformity of emergent light to be emitted, as compared with a transmission type screen using two sheets of microlens array, the transmission type screen has great industrial applicability.

### DESCRIPTION OF REFERENCE NUMERALS

- 5: Vehicle
- 6: Windshield
- 10: Projector
- 11: First light source
- 12: Second light source
- 13: Third light source
- 21: First dichroic prism
- 22: Second dichroic prism
- 26: Collimator lens
- 30: Projection mirror (scanner)
- 40: Transmission screen
- 50: Microlens array substrate
- 51: First main surface (first surface)
- 52: Second main surface (third surface)
- 53: Microlens
- 54: Microlens array
- 55: Smooth surface
- 60: Light diffusion substrate
- 61: First main surface (second surface)
- 62: Second main surface (fourth surface)
- 64: Light diffusion surface
- 65: Smooth surface
- 71: Substrate
- 73: Microlens part
- 75: Mold
- 76: Reference sheet
- 80: Concave mirror
- 85: Projection unit
- 100: Head-up display device
- 123: Intermediate member
- 125: Second mold
- 130: Resin material

## Claims

1. A transmission type screen comprising:
a microlens array substrate having a first surface equipped with a microlens array including a plurality of microlenses; and
a light diffusion substrate having a second surface equipped with a light diffusion surface;
wherein the first surface of the microlens array substrate, which is equipped with the microlens array, and the second surface of the light diffusion substrate, which is equipped with the light diffusion surface, are opposedly arranged.

2. The transmission type screen according to claim 1, wherein
an opposed interval between the microlens array substrate and the light diffusion substrate is not less than 0 µm and not more than 100 µm.

3. The transmission type screen according to claim 1 or 2, wherein
the microlens array is disposed in a first direction and a second direction crossing the first direction, and
a diffusion angle of the microlens array substrate in the first direction and a diffusion angle of the microlens array substrate in the second direction differ.

4. The transmission type screen according to any one of claims 1 to 3, wherein
a diffusion angle of the light diffusion substrate is not less than 5° and not more than 6°.

5. The transmission type screen according to any one of claims 1 to 4, wherein
the light diffusion surface has micro-irregularities.

6. The transmission type screen according to claim 5, wherein a cycle of the micro-irregularities is random.

7. A head-up display device wherein the transmission type screen according to any one of claims 1 to 6 is used.

8. The head-up display device according to claim 7, comprising:
a laser light source configured to emit laser light; and
a scanner configured to allow the laser light to scan on the transmission type screen.

9. The head-up display device according to claim 7, comprising:
a light source configured to emit light; and
an LCOS element configured to reflect the light onto the transmission type screen.

10. The head-up display device according to claim 7, comprising:
a light source configured to emit light; and
a DMD element configured to reflect the light onto the transmission type screen.
